# EUROPÄISCHE PATENTSCHRIFT

(11) **EP 0 891 749 B1**
(45) Veröffentlichungstag und Bekanntmachung des Hinweises auf die Patenterteilung: **29.05.2002**
(21) Anmeldenummer: 98105862.1
(22) Anmeldetag: 31.03.1998
(51) Int. Cl.: A61C 13/20, F27B 17/02

(54) **Brennofen**
Firing furnace
Four de cuisson

(30) Priorität: 18.06.1997 DE 19725866
(43) Veröffentlichungstag der Anmeldung: 20.01.1999
(73) Patentinhaber: Ivoclar Vivadent AG, 9494 Schaan (LI)
(72) Erfinder: Grünenfelder, Robert, 9490 Vaduz (LI); Meier, Andreas, 9490 Vaduz (LI); Seger, Jürgen, 9490 Vaduz (LI)
(74) Vertreter: Baronetzky, Klaus, Dipl.-Ing.

(56) Entgegenhaltungen:
- DE-A- 3 231 546
- DE-C- 19 542 984
- DE-U- 9 409 205
- GB-A- 2 191 568
- GB-A- 2 201 495
- US-A- 4 300 037

## Beschreibung

Es ist aus DE-PS 195 42 984, aber auch aus der DE-PS 26 32 846 einem Brennofen bekannt, mit einer Arbeitsfläche für das Bereitstellen des Brennguts, insbesondere einer Dentalkeramik, bei welchem eine Brennhaube gegenüber der Arbeitsfläche beweglich geführt ist. Diese Brennofen haben sich zwar im praktischen Betrieb bewahrt und werden von der vorliegenden Anmelderin erfolgreich vermarktet.

Die Erfindung betrifft einen Brennofen gemäß dem Oberbegriff von Anspruch 1. Ein derartiger Brennofen ist beispielsweise aus der DE-U-94 09 205 bekannt.

Ferner ist aus der DE 37 19 536 ein Brennofen bekannt, bei welcher Brenngutträger über waagerechte Arme verschwenkbar sind. Diese Lösung ist noch vergleichweise aufwendig und bedarf mindestens zweier Brenngutträger samt der entsprechenden elektromechanischen Steuerung, wobei zusätzlich dafür Sorge getragen werden muß, daß die Brenngutträger nie miteinander kollidieren. Der Brennraum ist vergleichweise groß, um die temperaturfesten Arme aufzunehmen, und die Anheizzeit ist im Verhältnis zur einsetzten Heizleistung lang, so daß nicht verwunderlich ist, daß diese Lösung sich nicht durchgesetzt hat.

Ein wesentlicher Gesichtspunkt für die Qualität herzustellender Dentalkeramiken ist die genaue Einhaltung der auf die Dentalkeramik abgestimmten Brennkurve. Hierzu gehört auch die Ruhezeit, die - wie es bereits bekannt geworden ist - im Rahmen der Abkühlzeit eingehalten werden muß. Während der Ruhezeit sind Erschütterungen möglichst zu vermeiden, um die Nachverfestigung der Keramik zu gewährleisten und insbesondere Spannungsrisse sicher auszuschließen.

Daher ist es vorgeschlagen worden, die Arbeitsfläche des eine Brennhaube aufweisenden Brennofens möglichst glatt zu machen, um zu gewährleisten, daß Brenngut nach erfolgtem Brand so erschütterungsfrei wie möglich zur Seite geschoben werden und dort die Ruhezeit eingehalten werden kann, während bereits die nächste Dentalkeramik für das Brennen vorgesehen sein kann. So sind gemäß der erstgenannten Patentschrift beidseitig des Bereichs der Brennhaube, also des Brennbereichs, je Ablageflächen vorgesehen, die es erlauben, das zu brennende Brenngut von einer Seite heranzuführen und das in der Ruhezeit befindliche Brenngut auf der anderen Seite noch nachhärten zu lassen.

Eine glatte Arbeitsfläche bietet andererseits keine Anschläge für die exakte Positionierung des Brennguts. Daher ist es vorgeschlagen worden, auf der Arbeitsfläche temperaturfeste Markierungen anzubringen, die die Positionierung des Brennguts im Brennbereich grundsätzlich erlauben. Da in der Praxis des Dentallabors regelmäßig ein schnelles - aber dennoch präzises - Arbeiten gefordert ist, kann es jedoch vorkommen, daß die Markierungen nicht genau beachtet werden, insbesondere wenn unterschiedlich dimensionierte Brenngutteller je nach der zu brennenden Dentalkeramik zum Einsatz gelangen.

Daher ist es vorgeschlagen worden, über eine Art Einführschräge die Brennhaube die Dentalkeramik oder den Brenngutteller zentrieren zu lassen. Eine exakte Zentrierung ist ebenfalls wichtig, um eine gleichmäßige Temperaturbeaufschlagung des Brennguts während des Sinterns zu gewährleisten - und damit Spannungsrisse während des Brennvorgangs zu vermeiden. Derartige besondere Anschläge erfordern jedoch eine spezielle Ausbildung der Brennhaube, die dann zur Einrichtung der betreffenden Schrägen etwas größer gehalten sein muß, wobei aufgrund der dann regelmäßig einseitigen Anlage zwischen dem Brenngutteller und der Brennhaube wiederum eine in der Tendenz einseitige Erwärmung stattfindet. Insgesamt wäre es wünschenswert, einen Kontakt zwischen dem Brenngut und der Brennhaube sicher zu vermeiden.

Demgegenüber liegt der Erfindung die Aufgabe zu Grunde, einen Brennofen gemäß dem Oberbegriff von Anspruch 1 zu schaffen, der eine spannungsrißfreie oder zumindest spannungsrißärmere Herstellung von Dentalkeramiken auch bei hohem geforderten Durchsatz gewährleistet.

Diese Aufgabe wird erfindungsgemäß durch Anspruch 1 gelöst. Vorteilhafte Weiterbildungen ergeben sich aus den Unteransprüchen.

Der erfindungsgemäße Brennofen zeichnet sich durch die Realisierung eines Bedienarms für die Zuführung und Abführung des Brennguts in den bzw. aus dem Brennbereich aus. Unter Bedienarm sei hier jede beliebige Bedienvorrichtung zu verstehen, die die Bewegung des Brennguts zwischen Brennbereich und Abstellbereich ermöglicht. Die Erfindung ermöglicht überraschend die Herstellung spannungsrißärmerer Dentalkeramiken, was darauf zurückzuführen ist, daß die Ruhezeit stets in dem in erforderlichen Ausmaß eingehalten werden kann, nachdem der erfindungsgemäße Brennofen erstmals auch den kontinuierlichen Betrieb wärend der Nachtstunden ermöglicht, so daß bei vergrößertem Durchsatz dennoch die Ruhezeiten verlängert werden können.

Aufgrund der Bedienung durch den Bedienarm ist es möglich, stets eine gleiche und exakte Positionierung des Brennguts exakt in der Mitte des Brennbereichs zu gewährleisten, ohne daß der Bediener aufgrund von Bedienungsfehlern eine einseitige Erwärmung und damit das Entstehen von Spannungsrissen während des Brennvorgangs versehentlich herbeiführen könnte.

Erfindungsgemäß wird dies durch das motorisch gesteuerte Verschwenken des Bedienarmes zusammen mit dem Brenngut in den Brennbereich gewährleistet. Durch das Zusammenwirken von Halteelementen an dem Brenngutteller mit Greifelementen an dem Bedienarm ist es möglich, beim Lösen der Verbindung den Brenngutteller exakt in der gewünschten Position zu belassen, so daß der Brennvorgang in gleichbleibender Qualität realisierbar ist.

Der Bedienarm kann in beliebiger geeigneter Weise ausgebildet sein. Bevorzugt ist er an einer Schwenkachse gelagert und mindestens im Bereich seiner Greifelemente in der Höhe verstellbar. Bereits bei dieser zweidimensional verstellbaren Ausgestaltung ist eine Zuführung und Entfernung des Brenngut in den bzw. aus dem Brennbereich möglich.

Nach Abstellen des vorbereiteten Brennguts im Abstellbereich wird der Bedienarm programmgesteuert veranlaßt, sich abzusenken, so daß seine Greifelemente in Anlage mit den Halteelementen des Brennguttellers gelangen. In der abgesenkten Position wird der Brenngutteller vom Bedienarm über die völlig ebene Arbeitsfläche verschwenkt, bis der Brennbereich und die Brennposition erreicht ist.

In dieser Position wird der Bedienarm erneut angehoben, so daß sich seine Greifelemente von den Halteelementen lösen. Der Bedienarm wird zurückgeschwenkt und die zuvor angehobene oder aufgeschwenkte Brennhaube senkt sich zum Start des Brennvorgangs. Nach erfolgtem Brand wird die Brennhaube erneut angehoben oder aufgeschwenkt und der Bedienarm wird in den Brennbereich geschwenkt, wo er mit seinen Greifelementen durch Absenken erneut die Halteelemente greift und das Brenngut in den Abstellbereich zurückschwenkt.

Bevorzugt ist es vorgesehen, daß die Halteelemente universell für den Eingriff in die Greifelemente vorgesehen sind. Erfindungsgemäß ist es besonders günstig, daß unterschiedliche Brenngutteller eingesetzt werden können, wobei durch die Koppelung zwischen Greifelement und Halteelement je eine definierte zentrische Lage sichergestellt ist.

Es ist bevorzugt, die Verschwenkung des Brennguts ziemlich langsam zu realisieren, wobei auch eine langsame Beschleunigung und Abbremsung der Schwenkbewegung realisierbar ist.

Bei dieser einfachsten Ausgestaltung des erfindungsgemäßen Brennofens ist bereits ein spannungsrißfreies Arbeiten und ein Nachtbetrieb möglich. Die Erfindung eröffnet jedoch darüber hinaus die Möglichkeit, eine Art Fließbandbetrieb zu realisieren, der das Brennen mehrerer Dentalkeramiken wärend der Nacht erlaubt. Hierzu ist es möglich, über den Bedienarm auch ein Anheben und Absenken des Brennguttellers zu realisieren, wobei dann die nebeneinander auf ihren Tellern angeordneten Dentalkeramiken je separat zugeführt, gebrannt und abgeführt werden.

Gemäß einer alternativen Ausgestaltung sind Zuführ- und Abführbereich getrennt beispielsweise rechts und links neben dem Brennbereich angeordnet. Der Bedienarm kann mit seiner Schwenkachse dann bevorzugt in dem rückwärtigen Bereich der Brennhaube gelagert sein, wobei es sich versteht, daß ein gewisser Abstand zur Hubmechanik der Brennhaube gewährleisten sein sollte.

Es versteht sich, daß der erfindungsgemäße Brennofen mit einem Hubmechanismus, einem Schwenkmechanismus sowie Kombinationen dieser ausgestattet sein kann, bei welchen insbesondere die Brennhaube zunächst angehoben und dann verschwenkt werden kann, wobei in allen Fällen der Bedienarm so gelagert ist, daß er nicht mit dem Hub- oder Schwenkmechanismus kollidiert.

Gemäß einer anderen Ausgestaltung ist es vorgesehen, daß der Bedienarm eine dreidimensionale Bewegung und Bedienung nach der Art eines Roboterarmes erlaubt. Diese Ausgestaltung ermöglicht auch dann eine exakte Plazierung des Brennguts, wenn die Arbeitssfläche nicht ganz eben ist und der Brennbereich beispielsweise gegenüber dem umgebenden Bereich erhaben ausgebildet ist.

Die Realisierung der Greifelemente und der Halteelemente ist in weiten Bereichen an die Erfordernisse anpaßbar. So ist es auch möglich, daß die an dem Brenngutteller angebrachten Halteelemente, anstelle der Greifelemente Greiffunktionen ausüben und die Greifelemente des Bedienarmes demnach als Halteelemente wirken.

Obwohl eine Bewegungssteuerung mit einer Ungenauigkeit von 1 mm heutzutage ohne weiteres realisierbar ist, ist es bevorzugt, an den Greifelementen eine kleine Einführschräge vorzusehen, um dem Bedienarm einen Fangbereich von beispielsweise 5 bis 10 mm zu verleihen. Diese ist weniger für die Ankopplung im Brennbereich erforderlich, nachdem in der Regel dort keine Veränderung in Position des Brennguttellers - abgesehen von der im Submillimeterbereich liegenden thermischen Ausdehnung - auftritt. Vielmehr ist es bevorzugt, einen Fangbereich bereitzustellen, damit auch bei einer im Abstellbereich bespielsweise von einer Hilfskraft ungenau plazierten Dentalkeramik ein sicheres Greifen gewährleistet wird.

Während die einfachste Ausgestaltung der erfindungsgemäßen Greif- und Halteelemente sich auf eine rein mechanische Verriegelung beschränkt, ist es auch möglich, die Greifelemente und Halteelemente wahlweise mechanisch oder elektromagnetisch zu verriegeln. Die Lösung ist dann bevorzugt, wenn ein Anheben des Brennguttellers realisiert werden soll.

Weitere Vorteile, Einzelheiten und Merkmale ergeben sich aus der nachfolgenden Beschreibung mehrerer Ausführungsbeispiele anhand der Zeichnung.

Es zeigen:
- Fig. 1: eine leicht schematisierte Ansicht eines erfindungsgemäßen Brennofens in perspektivischer Darstellung in einer ersten Ausführungsform, wobei die Brennhaube aus Gründer der Vereinfachung der Darstellung weggelassen ist;
- Fig. 2: eine ebenfalls perspektivische Darstellung einer weiteren Ausführungsform des erfindungsgemäßen Brennofens; und
- Fig. 3: eine ebenfalls perspektivische Darstellung einer dritten Ausführungsform des erfindungsgemäßen Brennofens.

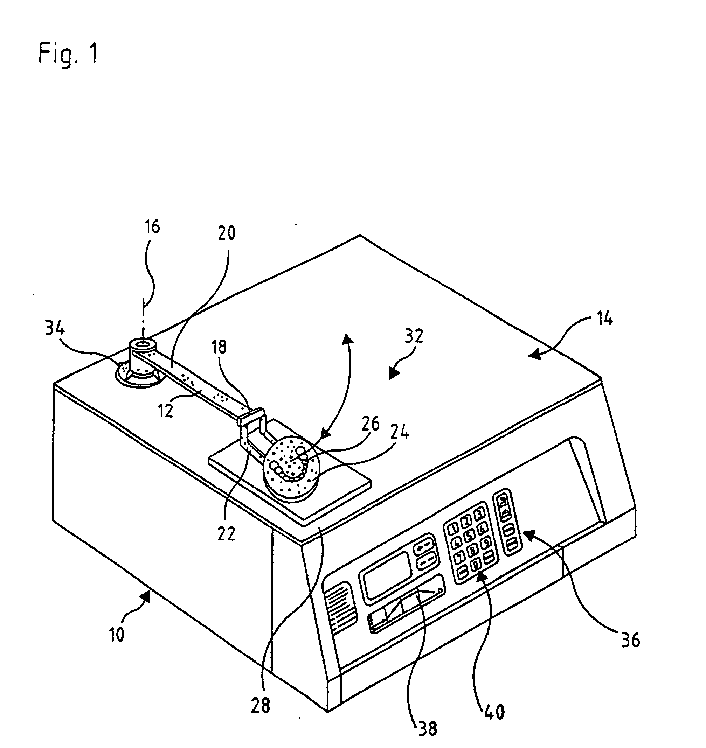

Der in Fig. 1 dargestellte Brennofen 10 weist einen Bedienarm 12 auf, der auf einer Arbeitsfläche 14 gelagert ist.

Es versteht sich, daß anstelle der hier vorgesehenen Lagerung des Bedienarms 12 auf der Arbeitsfläche 14 der Bedienarm 12 auch an einer beliebigen anderen Stelle gelagert sein kann. Der Bedienarm ist um eine Schwenkachse 16, die sich vertikal erstreckt, schwenkbeweglich gelagert und zudem entlang der Schwenkachse 16 axial, also in der Höhe verstellbar. Er weist Greifelemente 18 an seinem vorderen Ende 20 auf, die dafür geeignet ausgebildet sind, Halteelemente 22 eines Brennguttellers 24 zu greifen, der als Brenngut 26 eine Dentalkeramik aufnimmt.

In den Zeichnungen ist schematisch ein Zahnsatz als zu brennende Dentalkeramik angedeutet, wobei es sich versteht, daß anstelle dessen eine beliebige andere Dentalkeramik oder sogar ein anderes Brenngut einsetzbar ist.

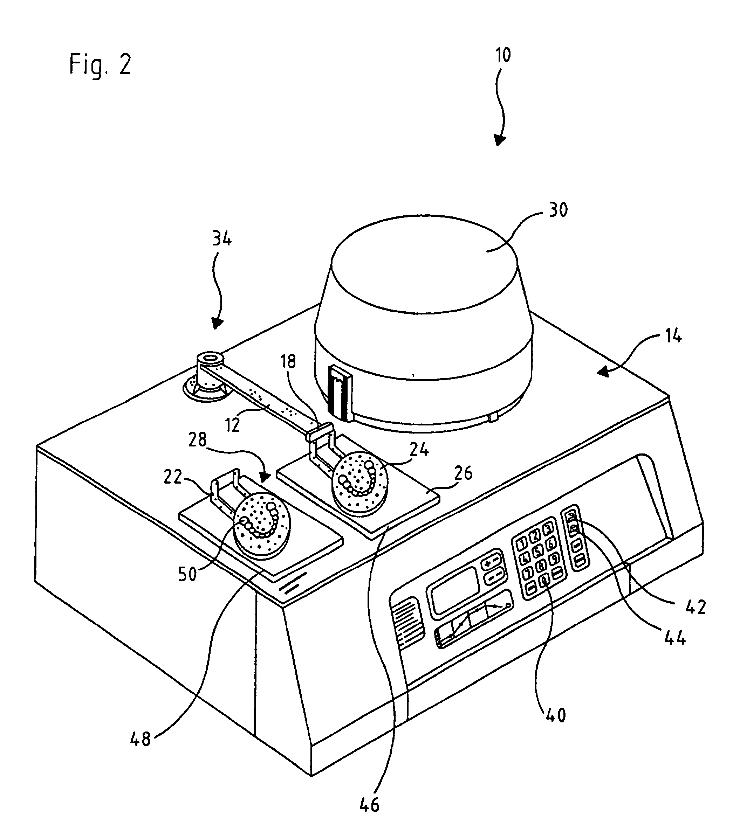

Auch wenn der in den Figuren dargestellte Brenngutteller 24 in der Darstellung gemäß den Figuren rechteckig ist, versteht es sich, daß eine beliebige andere, beispielsweise runde, Form ebenfalls realisiert werden kann, vorausgesetzt, die größeren zu brennenden Dentalkeramiken lassen sich auf dem Brenngutteller 24 unterbringen. Die Abmessungen des Brennguttellers sind bevorzugt so gewählt, daß der Brenngutteller 24 in den Innenraum der in Fig.2 dargestellten Brennhaube 30 paßt.

In der Darstellung gemäß Fig. 1 befindet sich sowohl der Bedienarm 12 als auch der Brenngutteller 24 und damit das Brenngut 26 in einem Abstellbereich 28, also außerhalb der Brennhaube 30. Durch Verschwenken des Bedienarmes 12 ist eine Verbringung in den Brennbereich 32 möglich, der von der in Fig. 2 dargestellten Brennhaube 30 überdeckbar ist. Hierzu greifen die Greifelemente 18 die Halteelemente 22 und führen eine Verschwenkung um etwa 45° durch.

Zum Lösen der Verbindung zwischen den Greifelementen 18 und den Halteelementen 22 ist es vorgesehen, daß der Bedienarm 12 angehoben wird, wobei das hier dargestellte Ausführungsbeispiel ein Anheben der Schwenkachse 16 darstellt. Anstelledessen ist es auch möglich, eine weitere, sich horizontal erstreckende Schwenkachse im Bereich der Lagerung 34 des Bedienarmes vorzusehen, so daß der Bedienarm 12 zum Anheben nach oben geschwenkt werden kann.

Gemäß einer weiter modifizierten Ausführungsform ist es vorgesehen, Greifelemente mit einem Elektromagneten auszustatten, der auf einen ferromagnetischen Bereich des Halteelements wirkt. Diese Lösung erlaubt es, wahlweise das Halteelement und damit den Brenngutteller 24 anzuheben, wenn das Greifelement 18 angehoben wird.

In der dargestellten Ausführungsform bestehen die Halteelemente 22 aus zwei nach oben gerichteten Lagerzapfen, die für den Eingriff in je entsprechende Buchsenausnehmungen den Greifelementen 18 bestimmt sind. Es versteht sich, daß auch eine beliebige andere geeignete lösbare Verbindung erfindungsgemäß realisierbar ist.

Wesentlich für die erfindungsgemäße Lösung ist ferner die Realisierung einer Programmsteuerung 36, die sowohl die motorische Betätigung des Bedienarms 12 als auch die der Brennhaube 30 als auch die schematisch dargestellte Brennkurve 38 steuert.

Der Abstellbereich 28 und der Brennbereich 32 können in einer modifizierten Ausgestaltung je mit Sensoren versehen sein, die die Programmsteuerung unterstützen und zudem eine Fehlbedienung ausschließen. Die betreffenden Sensoren können sicherstellen, daß der Bedienarm 12 den Brenngutteller 24 zur Vermeidung eines Fehlbrands sicher gegriffen hat und daß die Positionierung in der gewünschten Weise realisiert ist.

Wie aus den Figuren ersichtlich ist, können beispielsweise in einem Bedienfeld 40 mehrere Tasten für die Einstellung der Brennkurve und eine Taste 42 in der Bedeutung "Haube auf" und eine Taste 44 in der Bedeutung "Haube zu" vorgesehen sein. In Verbindung mit entsprechenden Sensoren kann durch "Haube auf" zugleich der im Abstellbereich vorhandene Brenngutteller in den Brennbereich überführt werden, und durch die Taste 44 "Haube zu" der Bedienarm 12 von dem Brenngutteller 24 gelöst und in den Abstellbereich verschwenkt werden, um den Brennvorgang einzuleiten.

Wenn andererseits die Taste 42 während des Brennvorgangs betatigt wird - etwa um einen versehentlichen Brand abzubrechen - wird die Brennhaube 30 angehoben, der Bedienarm 12 schwenkt in den Brennbereich 32, nimmt dort den Brenngutteller 24 auf und verschwenkt ihn in den Abstellbereich 28. Wenn sich kein Brenngutteller 24 im Abstellbereich 28 befindet und die Taste 44 gedrückt wird, erfolgt sensorgesteuert keine Zufuhr eines Brennguttellers, sondern die Brennhaube 30 wird lediglich abgesenkt.

Die Ausführungsform gemäß Fig. 2 zeichnet sich durch eine schematisch dargestellte automatische Brennraumbestückung mit einer Mehrzahl von zu brennenden Dentalkeramiken aus. Es versteht sich, daß es bevorzugt ist, gleichartige Dentalkeramiken 26 zu brennen, wobei es jedoch auch möglich ist, über das Bedienfeld 40 für jede Dentalkeramik eine spezielle Brennkurve zu programmieren.

Bei der Ausführungsform gemäß Fig. 2 wird zunächst der rechte Brenngutteller 24 mit dem frischen Brenngut 26 in den Brennbereich 32 nach Anheben der Brennhaube 30 verschwenkt und dort gebrannt. Nach Abschluß des eigentlichen Brennvorgangs wird der Brenngutteller 24 an die gleiche erste Position 46 des Abstellbereichs 28 überführt, und verbringt dort seine Ruhezeit.

Während dieser Zeit kann bereits der zweite Brenngutteller 48 mit dem zweiten Brenngut 50 von dem Bedienarm 12 und dessen Greifelement 18 erfaßt und über seine Halteelemente 22 mit dem Bedienarm 12 verbunden werden. In dieser Ausführungsform ist die Ausgestaltung der Halteelemente und Greifelemente 22 und 18 so gewählt, daß ein Anheben der Brenngutteller 24 und 48 möglich ist.

Der zweite Brenngutteller 48 wird angehoben und über den ersten Brenngutteller 24 verschwenkt und in den Brennbereich 32 verbracht. Nachdem der eigentliche Brennvorgang auch für das zweite Brenngut 50 abgeschlossen ist, wird der Brenngutteller 48 in gleicher Weise aus dem Brennbereich 32 entnommen, über die erste Position 46 des Abstellbereichs 28 gehoben und in die zweite Position 52 verbracht, in welcher die Ruhezeit ablaufen kann.

Unterdessen ist die Ruhezeit für die in der ersten Position 46 lagernde Dentalkeramik 26 abgelaufen, und dorthin kann zwischenzeitlich eine dritte Dentalkeramik auf einem entsprechenden Brenngutteller plaziert worden sein, die dann wiederum dem Brennbereich 32 zugeführt und gebrannt werden kann.

Auf diese Weise ist bereits mit der Ausführungsform gemäß Fig. 2 ein kontinuierlicher Betrieb unter Erhöhung des Durchsatzes trotz Einhaltung der erwünschten Ruhezeiten realisierbar.

Es versteht sich, daß es günstig sein kann, die Anzahl der Positionen im Abstellbereich 28 über die erste Position 46 und die zweite Position 52 hinaus zu erweitern. Diese Ausführungsform erlaubt dann auch einen kontinuierlichen Betrieb, in dem der Brennofen beispielsweise abends mit zehn Dentalkeramiken bestückt wird, die dann am nächsten Morgen fertig gebrannt abgeholt werden können, wobei es sich versteht, daß es auch bei dieser Ausgestaltung möglich ist, für jede Dentalkeramik die erwünschte Brennkurve einzuprogrammieren.

Während bei der Ausführungsform gemäß Fig. 2 der Abstellbereich lediglich links der Brennhaube 30 vorgesehen ist, und auch der Bedienarm 12 mit seiner Lagerung 34 im rückwärtigen Bereich der Brennhaube links gelagert ist, ist es gemäß einer alternativen - hier nicht dargestellten - Ausführungsform vorgesehen, einen Zuführbereich für Dentalkeramiken links von der Brennhaube 30 und einen Abführbereich rechts von der Brennhaube 30 vorzusehen. Für diese Ausführungsform kann es vorteilhaft sein, wenn der Bedienarm 12 entweder etwa mittig hinter der Brennhaube 30 gelagert ist/oder, wenn er eine Teleskopführung aufweist, um die an der fernen Seite vorgesehenen Positionen des dann zweigeteilten Abstellbereichs 28 zu erreichen.

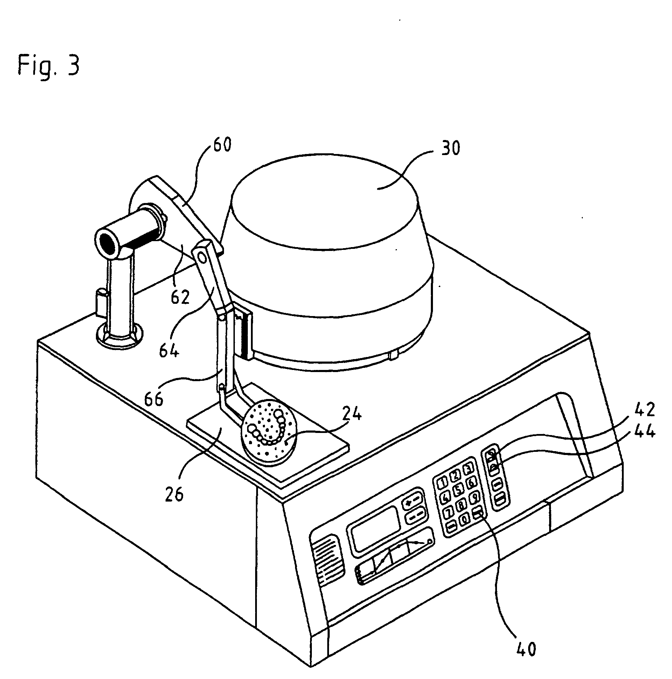

Eine modifizierte Ausgestaltung des erfindungsgemäßen Brennofens ist aus Fig. 3 ersichtlich. Diese Ausführungsform entspricht grundsätzlich der einfachen Ausgestaltung gemäß Fig. 1, wobei anstelle des dortigen Bedienarms 12 eine Art Roboterarm 60 vorgesehen ist, der mehrere Schwenkglieder 62, 64 und 66 mit je horizontalen Schwenkachsen aufweist, die eine mehrdimensionale Verfahrbarkeit der Brennguttellers 24 erlauben.

## Patentansprüche

1. Brennofen, mit einer Arbeitsfläche für das Bereitstellen des Brennguts, insbesondere einer Dentalkeramik, bei welchem eine Brennhaube gegenüber der Arbeitsfläche beweglich geführt ist, wobei die Bewegung der Brennhaube (30) motorisch gesteuert ist, **dadurch gekennzeichnet, daß** ein Bedienarm (12) für das Brenngut (26) an dem Brennofen (10) gelagert ist, mit welchem das Brenngut (26) in einen Brennbereich (32) auf die Arbeitsfläche einbringbar und aus diesem entfernbar ist.

2. Brennofen nach Anspruch 1, **dadurch gekennzeichnet, daß** eine Programmsteuerung (40) vorgesehen ist, die das Zusammenwirken der motorischen Bewegung der Brennhaube (30) und der motorischen Bewegung des Bedienarms (12) derart steuert, daß die Brennhaube (30) lediglich dann absenkbar ist, wenn der Bedienarm (12) sich nicht in den Brennbereich erstreckt.

3. Brennofen nach einem der vorhergehenden Ansprüche, **dadurch gekennzeichnet, daß** der Bedienarm (12) als Schwenkarm ausgebildet und auf der Arbeitsfläche (14) gelagert ist.

4. Brennofen nach einem der vorhergehenden Ansprüche, **dadurch gekennzeichnet, daß** der Bedienarm (12) als Schwenkhubarm ausgebildet ist und mit dem Bedienarm (12) das Brenngut (26), insbesondere über einen Brenngutteller (24) anhebbar und verschwenkbar ist.

5. Brennofen nach einem der vorhergehenden Ansprüche, **dadurch gekennzeichnet, daß** die Arbeitsfläche (14) von dem Brennbereich (32) bis zu einem Abstellbereich (28) eben ausgebildet ist.

6. Brennofen nach einem der vorhergehenden Ansprüche, **dadurch gekennzeichnet, daß** der Bedienarm (12) einen Brenngutteller (24) aufweist, der für die kraft- und/oder formschlüssige lösbare Verbindung mit dem Schaft des Bedienarms (12) ausgebildet ist.

7. Brennofen nach einem der vorhergehenden Ansprüche, **dadurch gekennzeichnet, daß** ein Brenngutteller (24) von dem Bedienarm (12) auf der Arbeitsfläche (14) verschiebbar ist.

8. Brennofen nach einem der vorhergehenden Ansprüche, **dadurch gekennzeichnet, daß** ein Brenngutteller (24) aus einem temperaturbeständigen Material besteht und Halteelemente (22) aufweist, die für die Verbindung mit dem Rest des Bedienarms (12) vorgesehen sind, wobei die Halteelemente (22) für die Verbindung mit Greifelementen (18) bestimmt sind, die einen Fangbereich für die sichere Verbindung zwischen den Halte- (22) und Greifelementen (18) auch dann aufweisen, wenn eine Abweichung von der gewünschten Positionierung des Brennguts im Brennbereich (32) und/oder im Abstellbereich (28) vorliegt.

9. Brennofen nach einem der vorhergehenden Ansprüche, **dadurch gekennzeichnet, daß** der Schwenkarm (12) zusätzlich in transversaler Richtung bewegbar ist.

10. Brennofen nach einem der vorhergehenden Ansprüche, **dadurch gekennzeichnet, daß** die Programmsteuerung (40) für die Steuerung des Bedienarms (12) zusätzlich auch die Brennkurve (38) für das Brennen des Brennguts (26) nach Wahl des Benutzers steuert.

11. Brennofen nach einem der vorhergehenden Ansprüche, **dadurch gekennzeichnet, daß** der Bedienarm (12) für das Brennen mehrerer Dentalkeramiken in eine Mehrzahl von Abstellpositionen (28) außerhalb des Brennbereichs (32) verfahrbar ist.

## Claims

1. Firing kiln, with a working surface for supplying the article for firing, in particular a dental ceramic, in which a firing hood is guided such that it can move with respect to the working surface, wherein the movement of the firing hood (30) is motor-controlled, **characterised in that** an operating arm (12) for the article for firing (26) is mounted on the firing kiln (10), with which arm the article for firing (26) can be brought into a firing area (32) onto the working surface and removed from this area.

2. Firing kiln according to Claim 1, **characterised in that** a program control unit (40) is provided which controls the interaction of the motor-driven movement of the firing hood (30) and the motor-driven movement of the operating arm (12) such that the firing hood (30) can only be lowered when the operating arm (12) does not extend into the firing area.

3. Firing kiln according to any one of the preceding Claims, **characterised in that** the operating arm (12) is formed as a swivelling arm and is mounted on the working surface (14).

4. Firing kiln according to any one of the preceding Claims, **characterised in that** the operating arm (12) is formed as a swivelling lifting arm, and the article for firing (26) can be raised and swivelled with the operating arm (12), in particular by way of a plate (24) for the article for firing.

5. Firing kiln according to any one of the preceding Claims, **characterised in that** the working surface (14) is of a plane formation from the firing area (32) to a deposit area (28).

6. Firing kiln according to any one of the preceding Claims, **characterised in that** the operating arm (12) comprises a plate (24) for the article for firing which is formed for non-positive and/or positive, releasable connection to the shank of the operating arm (12).

7. Firing kiln according to any one of the preceding Claims, **characterised in that** a plate (24) for the article for firing can be displaced by the operating arm (12) on the working surface (14).

8. Firing kiln according to any one of the preceding Claims, **characterised in that** a plate (24) for the article for firing consists of a temperature-resistant material and comprises holding elements (22) which are intended for connection to the remainder of the operating arm (12), wherein the holding elements (22) are intended for connection to gripping elements (18) which comprise a catch area for reliable connection between the holding elements (22) and gripping elements (18), even when the position of the article for firing diverges from the desired position in the firing area (32) and/or in the deposit area (28).

9. Firing kiln according to any one of the preceding Claims, **characterised in that** the swivelling arm (12) can additionally move in the transverse direction.

10. Firing kiln according to any one of the preceding Claims; **characterised in that** the program control unit (40) for controlling the operating arm (12) additionally controls the firing curve (38) for firing the article (26) as chosen by the user.

11. Firing kiln according to any one of the preceding Claims, **characterised in that** the operating arm (12) can be moved into a plurality of deposit positions (28) outside of the firing area (32) for firing several dental ceramics.

## Revendications

1. Four de cuisson avec une surface de travail pour la mise à disposition du matériau de cuisson, en particulier d'une céramique dentaire, dans lequel une hotte de cuisson est entraînée de façon mobile par rapport à la surface de travail, le mouvement de la hotte de cuisson (30) étant commandé par moteur, **caractérisé en ce qu'**un bras de manoeuvre (12) pour le matériau de cuisson (26) est monté sur le four de cuisson (10) et permet de mettre en place et d'enlever le matériau de cuisson (26) d'une zone de cuisson (32) sur la surface de travail.

2. Four de cuisson selon la revendication 1, **caractérisé en ce qu'**une commande par programme (40) est prévue pour commander le fonctionnement concomitant du mouvement motorisé de la hotte de cuisson (30) et du mouvement motorisé du bras de manoeuvre (12) de telle manière que la hotte de cuisson (30) ne peut être abaissée que lorsque le bras de manoeuvre (12) ne s'étend pas dans la zone de cuisson.

3. Four de cuisson selon l'une des revendications précédentes, **caractérisé en ce que** le bras de manoeuvre (12) est configuré comme un bras pivotant et qu'il est monté sur la surface de travail (14).

4. Four de cuisson selon l'une des revendications précédentes, **caractérisé en ce que** le bras de manoeuvre (12) est configuré comme un bras de levage pivotant et que le matériau de cuisson (26) peut être relevé et pivoté à l'aide du bras de manoeuvre (12), en particulier sur un plateau pour matériau de cuisson (24).

5. Four de cuisson selon l'une des revendications précédentes, **caractérisé en ce que** la surface de travail (14) a une configuration plane entre la zone de cuisson (32) et une zone de dépose (28).

6. Four de cuisson selon l'une des revendications précédentes, **caractérisé en ce que** le bras de manoeuvre (12) comporte un plateau pour matériau de cuisson (24) qui est configuré pour la liaison amovible, par contact ou par complémentarité de forme, avec la tige du bras de manoeuvre (12).

7. Four de cuisson selon l'une des revendications précédentes, **caractérisé en ce qu'**un plateau pour matériau de cuisson (24) peut être déplacé par le bras de manoeuvre (12) sur la surface de travail (14).

8. Four de cuisson selon l'une des revendications précédentes, **caractérisé en ce qu'**un plateau pour matériau de cuisson (24) est fabriqué en une matière résistant à la chaleur et comporte des éléments de retenue (22) qui sont prévus pour la liaison avec le reste du bras de manoeuvre (12), les éléments de retenue (22) étant destinés à la liaison avec des éléments de préhension (18) qui comportent une zone de prise pour la liaison sûre entre les éléments de retenue (22) et les éléments de préhension (18) même dans le cas où il y a un écart par rapport au positionnement souhaité du matériau de cuisson dans la zone de cuisson (32) et/ou dans la zone de dépose (28).

9. Four de cuisson selon l'une des revendications précédentes, **caractérisé en ce que** le bras de manoeuvre (12) peut être, en outre, déplacé dans le sens transversal.

10. Four de cuisson selon l'une des revendications précédentes, **caractérisé en ce que** la commande par programme (40) pour la commande du bras de manoeuvre (12) commande aussi, en plus, la courbe de cuisson (38) pour la cuisson du matériau de cuisson (26), au choix de l'utilisateur.

11. Four de cuisson selon l'une des revendications précédentes, **caractérisé en ce que** le bras de manoeuvre (12) peut être déplacé dans plusieurs positions de dépose (28) à l'extérieur de la zone de cuisson (32) pour la cuisson de plusieurs céramiques dentaires.
